# FASCICULE DE BREVET EUROPEEN

(11) **EP 3 600 884 B1**
(45) Date de publication et mention de la délivrance du brevet: **01.03.2023**
(21) Numéro de dépôt: 18722110.6
(22) Date de dépôt: 30.03.2018
(51) Int. Cl.: B32B 17/10, G02B 6/00, B60Q 3/208, F21V 8/00, F21V 33/00, B60Q 3/62

(54) **VITRAGE ECLAIRANT**
LEUCHTVERGLASUNG
ILLUMINATING GLAZING

(30) Priorité: 31.03.2017 FR 1752762
(43) Date de publication de la demande: 05.02.2020
(73) Titulaire: SAINT-GOBAIN GLASS FRANCE, 92400 Courbevoie (FR)
(72) Inventeur: HENNION, Alexandre, 60590 Trie Chateau (FR); BERARD, Mathieu, 75019 Paris (FR)
(74) Mandataire: Saint-Gobain Recherche
(86) Numéro de dépôt international: PCT/FR2018/050792
(87) Numéro de publication internationale: WO 2018/178591

(56) Documents cités:
- WO-A1-2007/074318
- WO-A1-2014/131972
- WO-A1-2016/001508
- FR-A1- 3 028 073

## Description

### DOMAINE TECHNIQUE DE L'INVENTION

Le domaine technique de l'invention est celui des vitrages éclairants.

L'invention trouve une application particulièrement avantageuse dans la réalisation de vitrages de véhicules ou de bâtiments.

### ARRIERE-PLAN TECHNOLOGIQUE DE L'INVENTION

Il est connu d'intégrer des diodes électroluminescentes inorganiques, également appelées DEL ou LED pour « Light-Emitting Diode » en anglais, au niveau du bord de vitrages simples ou feuilletés, de manière à ce que la lumière émise par les diodes entre par la tranche d'une feuille de verre et soit guidée par cette dernière jusqu'à un élément diffusant, également appelé moyen d'extraction de la lumière.

Ces vitrages éclairants ont essentiellement une fonction d'éclairage d'ambiance ou de signalisation lumineuse qui est obtenue avec des diodes de faible puissance. Le rendement lumineux de tels vitrages éclairés par la tranche est généralement limité en raison des pertes de lumière dues à l'absorption de la lumière par le verre servant de guide d'onde et/ou les matériaux à proximité de celui-ci.

Il est également connu, notamment du document WO 2013/110885, de percer un trou dans la feuille de verre et d'y disposer les diodes. Ce trou est réalisé proche du moyen d'extraction notamment de manière à raccourcir le chemin optique parcouru par la lumière entre les diodes et le moyen d'extraction. Il est ainsi possible de diminuer les pertes liées à l'absorption de la lumière.

La lumière émise par les diodes est injectée dans la feuille de verre par une tranche additionnelle formée par le trou. La lumière rebondit ensuite entre les deux faces principales de la feuille de verre jusqu'à atteindre le moyen d'extraction.

Un inconvénient de cette méthode est que l'injection lumineuse n'est pas homogène.

Un autre inconvénient est la difficulté de montage des diodes.

### RESUME DE L'INVENTION

La présente invention vise à remédier à l'un au moins des inconvénients qui viennent d'être mentionnés.

Selon l'invention ce but est atteint en prévoyant un vitrage éclairant comportant :
- une première feuille transparente de verre (de préférence) ou plastique (notamment rigide) percée d'un trou traversant délimité par une paroi interne ; première feuille comportant de préférence des moyens d'extraction de lumière (première feuille formant un guide de lumière)
- au moins une diode électroluminescente inorganique comprenant une surface d'émission de lumière (selon une direction principale d'émission orthogonale ou sensiblement orthogonale à la surface d'émission), de préférence plusieurs diodes électroluminescentes inorganiques; de préférence une pluralité de diodes électroluminescente inorganiques et présentant un cône d'émission d'au moins 80°, comprenant une surface d'émission de lumière selon une direction principale d'émission sensiblement orthogonale à la surface d'émission
le vitrage comportant en outre un élément de guidage de lumière en un matériau diélectrique transparent, l'élément de guidage (est une pièce) comportant une face d'entrée disposée en regard de la surface d'émission (de la diode et mieux de plusieurs diodes), un corps et une face de sortie disposée en regard de la paroi interne.

Dans le contexte de l'invention, le terme « transparent » signifie que la transmission lumineuse dans le domaine du visible est supérieure à 50%. Cependant, dans des applications où la visibilité à travers le vitrage n'est pas un facteur déterminant, la transmission lumineuse peut être beaucoup plus faible, par exemple supérieure à 5%.

Dans l'ensemble de la description et dans les revendications, on entend par « sensiblement orthogonal » un angle compris entre 85° et 95°.

L'élément de guidage est un dispositif optique à travers lequel la lumière se propage selon une direction souhaitée qui dépend principalement de la forme de l'élément de guidage. Grâce à lui, il est à la fois possible d'homogénéiser l'injection de la lumière voire même de limiter le phénomène de réfraction dans la feuille de verre en faisant en sorte que les rayons lumineux pénètrent dans la feuille de verre avec un angle d'incidence suffisamment élevé pour permettre une réflexion totale de ces rayons sur les faces principales de la feuille de feuille de verre. Le rendement lumineux du vitrage est ainsi amélioré.

L'élément de guidage permet plus de liberté de montage par exemple dans le positionnement de la diode, qui peut être placée à l'intérieur ou en dehors du trou, et/ou dans la taille de sa surface d'émission qui peut être plus grande que l'épaisseur du trou. En particulier, la face d'entrée de l'élément de guidage, qui est adaptée pour la surface d'émission de la diode ou de préférence des diodes, n'est pas nécessairement de taille égale à la face de sortie (à sa hauteur), qui est adaptée à la paroi interne du trou (à son épaisseur en particulier). En particulier la hauteur (l'épaisseur) de la face d'entrée n'est pas nécessairement égale à la hauteur (l'épaisseur) de la face de sortie.

L'élément de guidage peut être une fibre optique pour une diode ou même plusieurs diodes ou un ensemble de fibres optiques par exemple chacune dédiée à une ou plusieurs diodes. La fibre va donner de la flexibilité ou permettre de déporter encore plus la diode si besoin.

L'élément de guidage est de préférence une pièce monolithique.

L'élément de guidage, en choisissant de préférence une étendue assez importante de la face d'entrée de lumière, peut permettre, aisément, de transporter la lumière d'un grand nombre de diodes placées en regard de cette face d'entrée.

Dans le vitrage éclairant de la présente invention de préférence un grand nombre de diodes, par exemple au moins trois, de préférence au moins cinq et plus préférentiellement au moins dix diodes sont placées en regard de la face (ou des faces) d'entrée de lumière du guide d'onde. La face d'entrée peut être espacée de la surface d'émission, notamment d'au plus 5mm et même d'au plus 1mm, ou est en contact optique par une colle ou est en contact physique, et/ou la face de sortie être espacée de la paroi interne notamment d'au plus 5mm et même d'au plus 1mm, ou est en contact optique par une colle ou est en contact physique.

De préférence, l'élément de guidage n'est pas disposé contre la première feuille de verre, ne s'étend pas (ou peu) en regard de la face principale de la première feuille de verre.

L'élément de guidage utilisé dans la présente invention est généralement constitué d'un verre organique transparent, c'est-à-dire d'un polymère organique transparent. Ce polymère peut en principe être n'importe quel polymère thermoplastique ou thermodurci, présentant un coefficient d'absorption linéique faible, de préférence inférieur à 10-3 mm-1, plus préférentiellement inférieur à 10-4 mm-1.

On peut citer à titre d'exemples non limitatifs de polymères organiques susceptibles de convenir en tant que matériau de l'élément de guidage le poly(méthacrylate de méthyle) (PMMA), les polycarbonates (PC) thermoplastiques ou thermodurcis, ou encore les copolymères de cyclo-oléfines (COC).

Le polycarbonate allie une transparence satisfaisante (transmission de la lumière visible de 88 %) à une bonne résistance thermique (Tg 150 °C).

Le PMMA constitue le meilleur choix en raison de sa très grande transparence.Selon un mode de réalisation, le vitrage éclairant est un vitrage feuilleté comportant en outre une deuxième feuille de verre et un intercalaire de feuilletage disposé entre la première feuille de verre de préférence en verre et la deuxième feuille de verre.

Il peut d'agir d'un vitrage feuilleté bombé.

La première feuille peut être en plastique comme un poly-méthacrylate de méthyle PMMA, polycarbonate (PC), voire un poly(téréphtalate d'éthylène PET.

De préférence, la première feuille est en verre minéral sodo-calcique incolore tel que le verre clair ou extraclair comme le Planiclear^{®} commercialisé par la Demanderesse. Dans le cas d'un vitrage simple, la première feuille de préférence en verre présente une épaisseur comprise de préférence entre 2,5 mm et 6 mm. Dans le cas d'un vitrage feuilleté, l'épaisseur de la première feuille de préférence en verre est comprise de préférence entre 0,6 mm et 3,2mm, et plus préférentiellement entre 1,4mm et 2,2mm.

La deuxième feuille peut bien entendu être aussi transparente et incolore que la première feuille. Selon un mode de réalisation particulier, un vitrage feuilleté selon l'invention est constitué de deux feuilles Planiclear^{®} incolores.

Selon un autre mode de réalisation, la deuxième feuille est en verre teinté, par exemple en verre teinté présentant notamment une absorption lumineuse supérieure à 10% tel que Vénus^{®}, TSA3+ ou TSA4+ également commercialisés par la Demanderesse. La deuxième feuille a une épaisseur comprise de préférence entre 1,4 mm et 2,1 mm.

De préférence, l'intercalaire de feuilletage comporte au moins un matériau thermoplastique, préférentiellement du poly(butyral de vinyle) (PVB), de l'éthylène-acétate de vinyle (EVA) et/ou du poly(téréphtalate d'éthylène) (PET). L'intercalaire de feuilletage peut aussi comporter, par exemple, du polyuréthane (PU), du polypropylène (PP), du polyacrylate, du polyéthylène (PE), du polycarbonate (PC), poly(méthacrylate de méthyle) (PMMA), du poly(chlorure de vinyle) (PVC), une résine polyacétal, des résines de coulée, des acrylates, de l'éthylène-propylène fluoré (FEP), du poly(fluorure de vinyle) (PVF), et/ou de l'éthylène tétrafluoroéthylène (ETFE), ou des copolymères ou des mélanges de ceux-ci. L'intercalaire de feuilletage a une épaisseur comprise de préférence entre 0,2 mm et 1,1 mm. De préférence, l'intercalaire de feuilletage est transparent. L'intercalaire de feuilletage peut être incolore ou teinté. Le PVB peut être acoustique et/ou teinté. L'intercalaire de feuilletage peut comporter au moins un matériau thermoplastique comme le PVB ou l'EVA et une feuille polymérique transparente par exemple un PET, notamment couvrant la surface du vitrage, par exemple au moins 90% de la surface, Cette feuille polymérique peut être revêtue d'un revêtement électroconducteur de préférence transparent par exemple pour le contrôle solaire ou pour alimenter un ou des composants (opto)électroniques. Par exemple il s'agit de l'ensemble PVB/feuille polymérique revêtu/PVB et notamment PVB/PET revêtu/PVB.

La face de sortie de l'élément de guidage peut être en regard d'une première zone de la paroi interne :
- qui est locale
- ou plus étendue, par exemple qui couvre tout le périmètre de la paroi interne en particulier plusieurs diodes étant en regard de la face d'entrée de l'élément de guidage.

La face de sortie de l'élément de guidage peut ainsi s'étendre le long de la paroi interne du trou traversant (sur au moins 50%, ou même au moins 80% de la paroi interne), éventuellement avec une section fermée, et être commun à plusieurs diodes électroluminescentes inorganiques, notamment la paroi interne est courbe et l'élément de guidage est courbe

Selon un mode de réalisation préférentiel, le trou traversant a une forme courbée par exemple circulaire. L'élément de guidage peut suivre la forme du trou, par exemple courbée et de plus avoir une section fermée, par exemple ici une forme générale annulaire, ou une section ouverte par exemple ici une portion d'anneau.

Alternativement, le trou traversant peut être rectangulaire ou oblong. L'élément de guidage peut suivre la forme du trou et avoir une section fermée, par exemple ici une forme générale en cadre.

Le trou traversant présente une section fermée, c'est-à-dire qu'il est complètement entouré par la paroi interne. Le trou traversant n'est pas une encoche disposé en périphérie du vitrage mais est au contraire espacé de la périphérie du vitrage. En effet, la périphérie du vitrage est généralement munie de moyens d'encapsulation ou d'un cordon profilé de colle qui sont utiles à la fixation du vitrage mais qui pourraient gêner la mise en place des diodes.

Le trou traversant est de préférence suffisamment grand pour y loger plusieurs diodes électroluminescentes inorganiques. Toutefois, le trou ne dépasse pas de préférence une certaine taille au-delà de laquelle la solidité du vitrage risque d'être significativement réduite. Le trou traversant présente une surface de préférence inférieure à 50cm² et même à 10cm², et plus préférentiellement comprise entre 0,5cm² et 5 cm².

La ou les diodes peuvent être à émission frontale (« top-emitting LED » en anglais) ou à émission latérale (« side-emitting LED » en anglais).

La ou les diodes sont de préférence sur un support de diodes tel qu'une carte de circuit électronique, par exemple une carte à circuit imprimé (PCB pour « Printed Circuit Board » en anglais)

Le support de diodes est de préférence commun à plusieurs diodes. Le support de diodes peut être opaque, par exemple en étant recouvert d'une couche de vernis ou de peinture, et même masquer les diodes. Il peut comporter un substrat en une matière plastique

Selon un mode réalisation, l'intercalaire de feuilletage ou la deuxième feuille de verre forme un fond pour le trou traversant.

Le support de diodes avec des diodes à émission latérale peut suivre la forme générale du trou et avoir une face principale fixée au fond du trou traversant, directement ou indirectement, par exemple via un support de montage. Le support de diodes commun à plusieurs diodes à émission latérale peut être un disque (ou être oblong) ou un anneau dans le trou circulaire (ou oblong).

Le support de diodes avec des diodes à émission frontale peut suivre la forme de la paroi interne et même avoir une section fermée. Le support de diodes commun à plusieurs diodes à émission frontale peut être une bande flexible notamment en anneau ou portion d'anneau, de forme générale rectangulaire. La face principale avant du support de diodes porteuse des diodes est en regard de la paroi interne. La face principale arrière du support de diodes est par exemple fixée contre un ergot d'un couvercle renfermant le trou traversant ou d'un support de montage assemblé au fond du trou traversant.

L'élément de guidage comporte également des parois externes qui délimitent, avec la face d'entrée et la face de sortie, le corps de l'élément de guidage. Les parois externes guident la lumière et certaines d'entre elles peuvent constituer des faces de renvoi de la lumière. Les parois externes sont de préférence des surfaces très lisses, l'absence de rugosité permettant d'éviter ou, du moins, de réduire la perte de luminosité par diffusion de la lumière.

On entend par « face de renvoi » une paroi externe de l'élément de guidage qui assure une fonction de déviation de la lumière. La face de renvoi peut dévier la lumière d'au moins 80°, même à 90° et mieux d'au moins 170° ou même à 180°.

Cette face de renvoi peut soit comporter au moins une partie courbe soit elle peut comporter un ensemble de facettes. Lorsqu'elle comporte deux facettes cette face de renvoi fonctionne à la manière d'un périscope. Le nombre de facettes composant la face de renvoi n'est en principe pas limité et une association d'un grand nombre de facettes fonctionne de manière connue comme une face courbe.

Lorsque la face de renvoi comporte une face courbe ou est une face courbe, le rayon de courbure définissant cette face courbe est de préférence constant et définit alors par exemple un quart de cercle ou un demi-cercle.

Le corps de l'élément de guidage est en particulier espacé du fond du trou traversant et éventuellement fixé au fond du trou, par exemple par collage ou au moyen d'un élément adhésif double face. Alternativement, le corps de l'élément de guidage peut être en contact avec le fond du trou traversant.

En particulier on peut avoir des zones (bandes, plots) de collage entre le corps et le fond qui sont décalées de la direction principale d'émission de chaque diode ou si possible décalées du cône d'émission de chaque diode. On peut prévoir ces zones de collage entre des diodes voisines, entre chaque diode.

Pour fixer solidement l'élément de guidage au fond du trou traversant sans toutefois accroître la perte lumineuse, on peut insérer entre le fond du trou et l'élément de guidage une couche à faible indice de réfraction.

L'expression « à faible indice de réfraction » désigne une couche d'un matériau, organique ou minéral, ayant un indice de réfraction inférieur d'au moins 0,1 unité à l'indice de réfraction du matériau formant l'élément de guidage avec lequel elle est en contact. La différence d'indice de réfraction est de préférence au moins égale à 0,2 unité et encore plus préférentiellement au moins égale à 0,3 unité.

Cette couche à faible indice de réfraction peut être, par exemple, une couche de colle à faible indice de réfraction.

L'épaisseur de la couche à faible indice de réflexion est de préférence au moins égale à 1 micron, plus préférentiellement au moins égale à 5 microns.

La couche à faible indice de réfraction est avantageusement une couche d'air. En effet, l'air a un indice de réfraction égal à 1, c'est-à-dire inférieur à celui des matériaux solides.

Lorsque la couche à faible indice de réfraction est une couche d'air, on utilise avantageusement des écarteurs, pour maintenir une certaine distance entre les deux surfaces (fond du trou et élément de guidage) et garantir ainsi une épaisseur suffisante à la couche d'air, de préférence au moins égale à 10 microns, plus préférentiellement comprise entre 50 et 500 microns, idéalement entre 100 et 300 microns.

On peut également envisager la fixation de l'élément de guidage par collage au moyen d'un collage multi-points ou multi-lignes.

Selon un mode réalisation, le corps de l'élément de guidage comporte un revêtement externe réfléchissant disposé au niveau de l'interface entre le corps de l'élément de guidage et le fond du trou traversant. Ce revêtement permet d'empêcher que la lumière des diodes ne soit visible de l'autre côté du vitrage. En particulier le corps de l'élément de guidage est délimité par des parois externes pourvues d'un revêtement réfléchissant, par exemple une couche métallique comme de l'aluminium ou de l'argent.

Le trou traversant peut par exemple comporter un élément opaque (notamment absorbant) et au moins une partie du corps transparent de l'élément de guidage est espacée dudit élément opaque. En particulier on peut avoir des zones (bandes, plots) de collage entre le corps et l'élément opaque qui sont décalés de la direction principale de chaque diode ou si possible décalés du cône d'émission chaque diode. On peut prévoir ces zones de collage entre des diodes voisines, entre chaque diode.

Selon un mode réalisation, le trou traversant présente une première dimension caractéristique selon une direction de référence, le corps de l'élément de guidage étant assemblé sur un support de montage présentant une deuxième dimension caractéristique selon la direction de référence inférieure à la première dimension caractéristique, le support de montage étant disposé sur l'intercalaire de feuilletage ou sur la deuxième feuille de verre.

Les dimensions caractéristiques sont par exemple des diamètres dans le cas où des formes circulaires sont utilisées, ou bien une largeur ou une longueur dans le cas de formes rectangulaires ou allongées.

Selon un mode réalisation, le support de montage est réfléchissant, l'élément de guidage étant assemblé par exemple par collage ou le support de montage est opaque (notamment absorbant) et lorsque le corps a une paroi externe libre transparente, une partie (la majeure partie) du corps en regard du support de montage est espacée du support de montage.

On entend par « paroi externe libre » une paroi externe de l'élément de guidage dépourvue de revêtement réfléchissant.

Selon un mode de réalisation, la ou les diodes électroluminescentes sont disposées en dehors du trou traversant. Un avantage au fait de déporter la ou les diodes est d'obtenir une meilleure gestion thermique, les diodes pouvant avoir davantage de place pour dissiper la chaleur qu'elles génèrent. Un autre avantage est de pouvoir réduire la taille du trou traversant et ainsi minimiser l'impact de ce trou, notamment sur la solidité du vitrage. Encore un autre avantage est de pouvoir utiliser tous types de diodes sans être limité par l'espace disponible dans le trou traversant.

Selon un mode réalisation, les diodes électroluminescentes inorganiques sont disposées sur la première feuille en périphérie du trou traversant. En particulier le support de diodes porteur de diode(s) à émission latérale est disposé sur la première feuille de verre en périphérie du trou traversant.

Selon un mode de réalisation, le vitrage comporte un couvercle fermant le trou traversant, le couvercle délimitant une cavité englobant le trou traversant. Un avantage est d'agrandir l'espace disponible pour disposer les diodes et/ou l'élément de guidage.

En particulier, ladite diode électroluminescente est disposée à l'intérieur de la cavité, de préférence dans le trou traversant.

Le couvercle peut être transparent ou opaque (absorbant) et lorsque le corps a une paroi externe libre transparente, une partie (la majeure partie) du corps en regard du couvercle est espacée du couvercle opaque.

Selon un mode réalisation, le couvercle comporte une face intérieure à la cavité, ladite diode électroluminescente étant disposée sur la face intérieure du couvercle, par exemple contre ou collé sur cette face intérieure. En particulier le support de diodes porteur de la ou des diodes est disposée sur la face intérieure du couvercle.

Selon un mode réalisation, le couvercle est amovible, le couvercle étant fixé à la première feuille de verre par des moyens de fixation réversibles, tels que des vis ou des attaches de type clip.

Alternativement, le couvercle peut être collé à la première feuille de verre.

Selon un mode réalisation, la première feuille est percée d'une pluralité de trou traversant, l'élément de guidage comportant une pluralité de faces de sortie, chaque face de sortie étant disposée en regard de la paroi interne de l'un des trous traversant, notamment collée au moyen d'une colle optique ou espacée de ladite paroi interne. Cette configuration permet d'utiliser une seule source de lumière pour plusieurs point d'injection ce qui réduit les coûts.

Selon un mode réalisation, l'élément de guidage est assemblé à la première feuille par collage.

Selon un mode réalisation, le collage de l'élément de guidage est effectué au niveau de l'interface entre la paroi interne du trou traversant et la face de sortie de l'élément de guidage au moyen d'une colle optique, par exemple de type uréthane acrylique à réticulation par rayons ultraviolets.

Selon un mode de réalisation, les diodes sont alimentées en électricité au moyen d'une amenée de courant intégrée dans le vitrage feuilleté. Par exemple, un fil électrique peut être incorporé dans l'intercalaire de feuilletage.

Le vitrage selon l'invention peut comporter des moyens d'extraction de lumière, extraction de la lumière guidée dans la première feuille (issue de la ou desdites diodes), -amovibles (sticker etc) et/ou permanents- notamment choisis parmi une couche diffusante (par exemple à base d'émail ou encore une peinture etc) en regard voire sur l'une des faces principales de la première feuille ou une texturation de l'une des faces principales de la première feuille (sablé, acidé etc) ou encore des éléments diffusants dans la première feuille en particulier par gravure laser.

### BREVE DESCRIPTION DES FIGURES

L'invention et ses différentes applications seront mieux comprises à la lecture de la description qui suit et à l'examen des figures qui l'accompagnent, parmi lesquelles :
- les figures 1A et 1B représentent schématiquement un premier mode de réalisation d'un vitrage éclairant selon l'invention, respectivement en vue de coupe et en vue de dessus ;
- les figures 1C et 1D représentent schématiquement respectivement une première variante et une deuxième variante du vitrage de la figure 1A ;
- la figure 2 représente schématiquement un deuxième mode de réalisation d'un vitrage éclairant selon l'invention ;
- la figure 3 représente schématiquement un troisième mode de réalisation d'un vitrage éclairant selon l'invention ;
- la figure 4 représente schématiquement un quatrième mode de réalisation d'un vitrage éclairant selon l'invention ;
- la figure 5 représente schématiquement un cinquième mode de réalisation d'un vitrage éclairant selon l'invention ;
- la figure 6 représente schématiquement un sixième mode de réalisation d'un vitrage éclairant selon l'invention ;
- les figures 6A et 6B représentent schématiquement un sixième mode de réalisation d'un vitrage éclairant selon l'invention, respectivement en vue de coupe et en vue de dessus ;
- les figures 6C et 6D représentent schématiquement respectivement une première variante et une deuxième variante du vitrage de la figure 6A ;
- la figure 7 représente schématiquement un septième mode de réalisation d'un vitrage éclairant selon l'invention ;
- la figure 8A représente schématiquement un huitième mode de réalisation d'un vitrage éclairant selon l'invention ;
- la figure 8B représentent schématiquement une variante du vitrage de la figure 8A ;
- la figure 9 représente schématiquement un neuvième mode de réalisation d'un vitrage éclairant selon l'invention ;
- la figure 10 représente schématiquement un dixième mode de réalisation d'un vitrage éclairant selon l'invention ;
- la figure 11 représente schématiquement un onzième mode de réalisation d'un vitrage éclairant selon l'invention ;
- la figure 12 représente schématiquement un douzième mode de réalisation d'un vitrage éclairant selon l'invention ;
- la figure 13 représente schématiquement un treizième mode de réalisation d'un vitrage éclairant selon l'invention ;
- la figure 14 représente schématiquement un quatorzième mode de réalisation d'un vitrage éclairant selon l'invention ;
- la figure 15 représente schématiquement un quinzième mode de réalisation d'un vitrage éclairant selon l'invention ;
- les figures 16A à 16E représentent schématiquement des exemples de moyens de redirection de lumière équipant une face d'entrée d'un élément de guidage de lumière de l'un quelconque des modes de réalisation des figures 1 à 15

Les figures ne sont présentées qu'à titre indicatif et nullement limitatif de l'invention.

Pour plus de clarté, les éléments identiques ou similaires sont repérés par des signes de référence identiques sur toutes les figures.

### DESCRIPTION DETAILLEE D'UN MODE DE REALISATION DE L'INVENTION

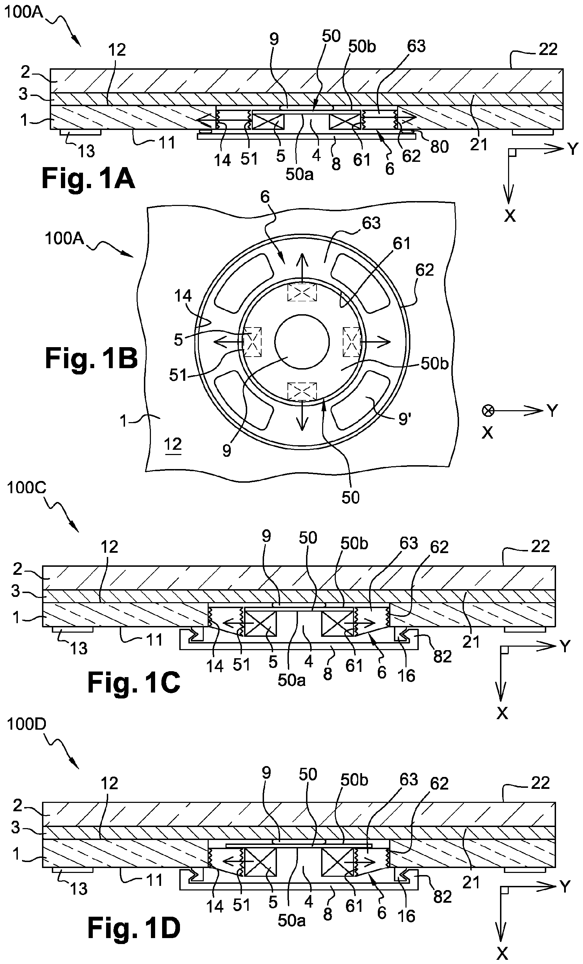

Plusieurs modes de réalisation d'un vitrage éclairant selon l'invention vont maintenant être décrits en référence aux figures 1 à 15. Selon des modes de réalisations, le vitrage éclairant est un vitrage feuilleté en particulier configuré pour former une vitre d'un véhicule (routier notamment), telle qu'un toit, une vitre latérale ou un pare-brise. Selon d'autres modes de réalisations, le vitrage éclairant est un vitrage simple, c'est-à-dire que le vitrage comprend une seule feuille de verre.

Le vitrage feuilleté de préférence bombé comporte une première feuille de verre transparente 1 bombée et une deuxième feuille de verre 2 bombée, de préférence également transparente et éventuellement teintée, liées entre elles au moyen d'un intercalaire de feuilletage 3 disposé entre les feuilles 1, 2. Les feuilles 1, 2 comportent chacune une première surface principale 11, 21 destinée à être orientée vers l'intérieur du véhicule et une deuxième surface principale 12, 22 destinée à être orientée vers l'extérieur du véhicule.

L'intercalaire de feuilletage 3 est par exemple disposé en contact adhésif avec la deuxième surface principale 12 de la première feuille 1 et avec la première surface principale 21 de la deuxième feuille 2. De préférence, l'intercalaire de feuilletage 3 est lui aussi transparent, de préférence en PVB qui peut être teinté et/ou acoustique. L'intercalaire de feuilletage peut comporter une feuille polymérique transparente par exemple un PET, notamment couvrant la surface, par exemple au moins 90%, Cette feuille peut être revêtue d'un revêtement électroconducteur transparent par exemple pour le contrôle solaire. Par exemple il s'agit de l'ensemble PVB/feuille /PVB et notamment PVB/PET/PVB.

La première feuille 1 est percée d'un trou traversant 4 s'étendant selon une première direction X sensiblement orthogonale aux surfaces principales 11, 12 de la première feuille 1. La première direction X correspond également à la direction d'empilement des différentes couches constitutives du vitrage feuilleté. Afin de faciliter le repérage dans l'espace dans la suite de la description, on définit une deuxième direction Y sensiblement orthogonale à la première direction X.

De préférence, le trou traversant 4 a une forme circulaire, qui est la forme la plus simple à réaliser.

Le trou traversant 4 s'étend de préférence seulement à travers la première feuille 1. La deuxième feuille 2 et l'intercalaire de feuilletage 3 ne sont alors pas percés. Le trou traversant 4 débouche à la fois sur la première surface principale 11 et sur la deuxième surface principale 12 de la première feuille 1. Le trou traversant 4 forme une paroi interne 14 dans la première feuille 1.

Alternativement, le vitrage feuilleté peut être percé de part en part, le trou traversant 4 s'étendant alors à travers la première feuille de verre 1, l'intercalaire de feuilletage 3 et la deuxième feuille de verre 2. Dans ce cas, le trou traversant 4 pratiqué dans la deuxième feuille de verre 2 peut être comblé par un élément d'obstruction de manière à assurer l'étanchéité du vitrage.

Le vitrage selon l'invention comporte une ou plusieurs diodes électroluminescentes inorganiques 5 (DEL ou LED). Chaque diode 5 comporte une surface d'émission 51 selon une direction principale d'émission sensiblement orthogonale à la surface d'émission 51. Les diodes 5 présentent toutes un cône d'émission au moins égal à 80°.

La surface d'émission 51 peut être disposée sur un côté de la diode 5, qui est alors dite « à émission latérale », ou sur une surface principale de la diode 5, qui est alors dite « à émission frontale ». En langue anglaise, de telles diodes sont désignées respectivement par les appellations « side-emitting LED » et « top-emitting LED ». Les diodes à émission latérale ont l'avantage de présenter un encombrement plus réduit que les diodes à émission frontale. Par contre, les diodes à émission frontale sont plus puissantes et moins coûteuses que les diodes à émission latérale.

Les diodes 5 sont montées sur un support de diodes 50 tel qu'une carte à circuit intégré (PCB en anglais). Le support 50 est de préférence commun à toutes les diodes 5. Alternativement, chaque diode 5 peut être disposée sur un support individuel, ou plusieurs diodes 5 peuvent être montées sur un même support.

Le support 50 comporte une face principale avant 50a porteuse des diodes 5 et une face principale arrière 50b opposée à la face avant 50a. Le support de montage présente une épaisseur de préférence inférieure à 500µm, et plus préférentiellement inférieure à 200µm.

Dans les modes de réalisation illustrés aux figures 1 à 5, les diodes 5 sont à émission latérale.

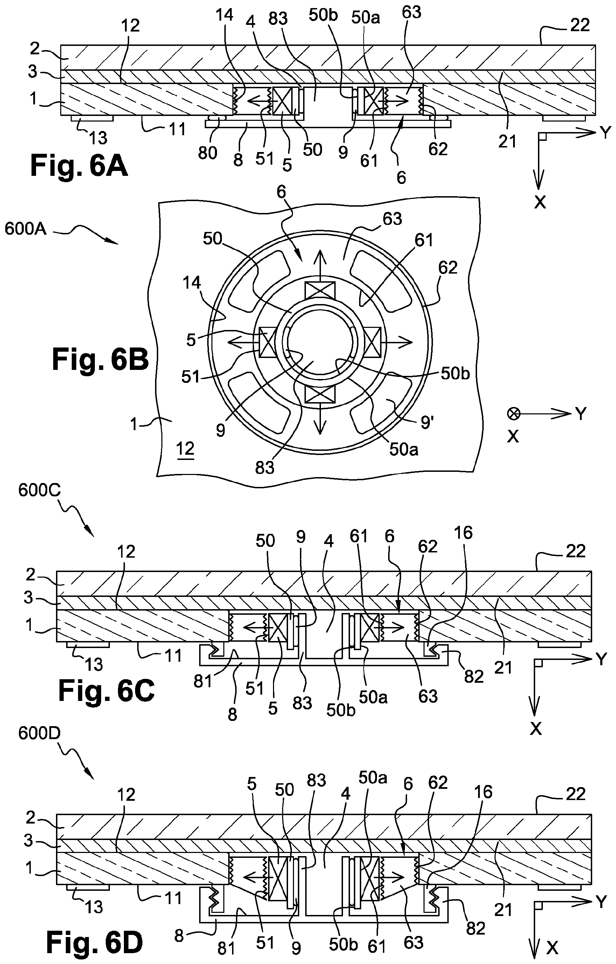

Dans les modes de réalisation illustrés aux figures 6 à 15, les diodes 5 sont à émission frontale.

Le vitrage selon l'invention comporte également un élément de guidage 6 de la lumière émise par les diodes 5. L'élément de guidage 6 est configuré pour injecter la lumière des diodes 5 dans la première feuille 1 via la paroi interne 14 formée par le trou traversant 4. L'élément de guidage 6 comporte une face d'entrée 61 et une face de sortie 62 ainsi qu'un corps 63 délimité par la face d'entrée 61, la face de sortie 62 et des parois externes.

Les diodes 5 sont disposées de manière à ce que leurs surface d'émission 51 soient en face, et à proximité, de la face d'entrée 61 de l'élément de guidage 6, espacé ou en contact. La surface d'émission 51 de chaque diode 5 et la face d'entrée 61 de l'élément de guidage 6 sont espacées d'au plus 1 mm, de préférence d'au plus 5 mm, espacé ou même en contact, par exemple en contact optique (par une colle) ou en contact physique.

On entend par « contact optique » deux surfaces conformes en contact ou bien deux surfaces liées par une colle transparente (appelée colle d'indice).

La surface d'émission 51 de chaque diode 5 est de préférence sensiblement parallèle à la face d'entrée 61 de l'élément de guidage 6.

Dans l'ensemble de la description et dans les revendications, on entend par « sensiblement parallèle » un angle compris entre -5° et 5°.

L'élément de guidage 6 est disposé de manière à ce que sa face de sortie 62 soit en face, et à proximité, de la paroi interne 14, espacé ou en contact. La face de sortie 61 de l'élément de guidage 6 peut être espacé de la paroi interne d'au plus 5 mm, de préférence d'au plus 1 mm, espacé ou même en contact, par exemple en contact optique (par une colle) ou en contact physique. La lumière émise par les diodes 5 se propage dans le corps 63 de l'élément de guidage 6 entre la face d'entrée 61 et la face de sortie 62. Avantageusement, cette propagation s'effectue par réflexion totale sur les parois de l'élément de guidage 6, ce qui permet de maximiser le rendement lumineux du vitrage.

L'élément de guidage 6 est utilisé pour optimiser l'injection de lumière dans la première feuille 1. Il permet d'améliorer l'homogénéité de l'éclairage de la première feuille 1. L'élément de guidage 6 peut présenter une grande variété de formes de manière à s'adapter aux différentes configurations de type et de positionnement des diodes, comme décrit plus en détail par la suite.

Sur l'ensemble des figures, les flèches indiquent le sens de propagation de la lumière émise par les diodes 5. La flèche issue de la surface d'émission 51 d'une diode 5 symbolise également la direction principale d'émission de cette diode 5.

La lumière injectée à travers la paroi interne 14 est guidée par la première feuille 1 jusqu'à un moyen d'extraction de la lumière 13. Il s'agit par exemple d'un émail opaque de couleur claire disposé sur la deuxième surface principale 12 de la première feuille 1.

La figure 1A est une vue en coupe d'un premier mode de réalisation d'un vitrage 100A selon l'invention dans lequel l'élément de guidage 6 a une forme annulaire avec une section longitudinale sensiblement rectangulaire. La face d'entrée 61 et la face de sortie 62 de l'élément de guidage 6 sont sensiblement parallèles. La face de sortie 62 de l'élément de guidage 6 suit la paroi interne 14 du trou traversant 4. La face d'entrée 61 de l'élément de guidage 6 délimite un espace libre à l'intérieur du trou traversant 4. Les diodes 5 à émission latérale sont disposées dans l'espace libre avec leur surface d'émission 51 en vis-à-vis de la surface d'entrée 61 de l'élément de guidage 6. Dans ce premier mode de réalisation, les diodes 5 émettent une lumière selon la deuxième direction Y.

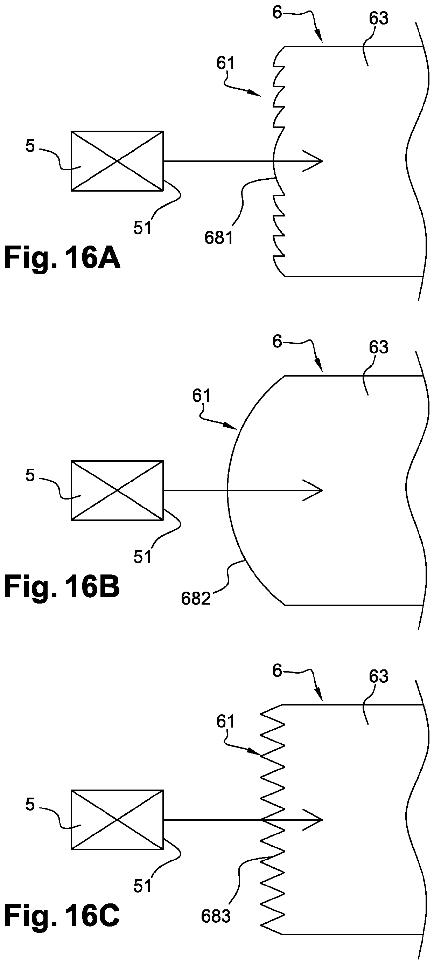

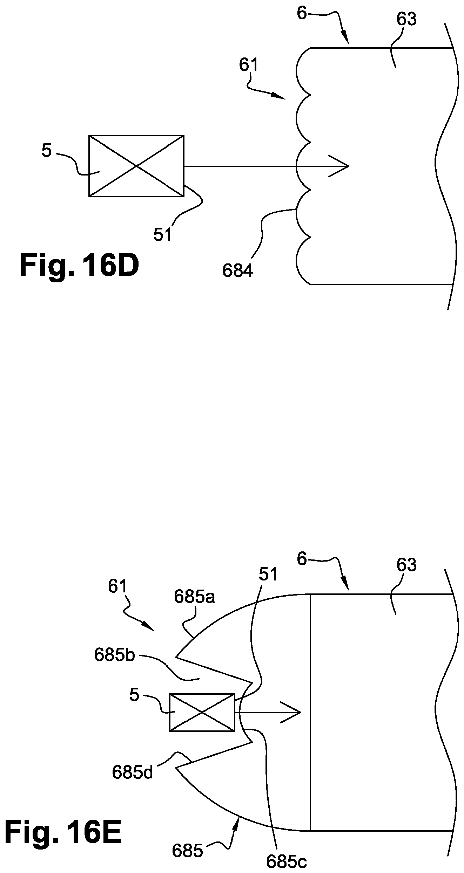

De préférence, la face d'entrée 61 de l'élément de guidage est non plane et en particulier collé ou en contact non optique avec la diode ou les diodes, notamment en contact physique ou espacé. La face d'entrée 61 peut être pourvue de moyens de redirection 68 de la lumière par exemple disposés en vis-à-vis de la surface d'émission 51 de chaque diode 5. Les moyens de redirections peuvent être des lentilles de Fresnel 681 comme illustré à la figure 16A, des lentilles convexes 682 comme illustré à la figure 16B, des réseaux prismatiques 683 comme illustré sur la figure 16C, des réseaux de microlentilles convexes 684 comme illustré à la figure 16D ou des moyens de collimation 685 comme illustré à la figure 16E.

Les moyens de collimations 685 ont par exemple une forme générale d'ogive délimitée par une surface périphérique 685a et creusée d'une cavité 685b de section circulaire, la surface périphérique 685a et la cavité 685b étant concentriques. La cavité 685b peut être formée par une lentille convexe 685c et une paroi tronconique 685d s'étendant longitudinalement depuis le bord de la lentille convexe 685c jusqu'à déboucher sur la surface périphérique 685a. La paroi tronconique 685d présente un diamètre s'agrandissant à mesure qu'elle s'éloigne de la lentille convexe 685c. La surface d'émission 51 d'une diode 5 peut être disposée à l'intérieur ou à l'extérieur de la cavité 685b.

La face de sortie 62 de l'élément de guidage 6 peut également être non plane. La face de sortie 62 peut être pourvue de moyens de redirection de la lumière tels que ceux précédemment décrits en référence aux figures 16A à 16E. Les moyens de redirection de la face d'entrée 61 et de la face de sortie 62 peuvent être identiques ou différents.

De préférence, les moyens de redirection font partie intégrante du corps 63 de l'élément de guidage 6. Alternativement, les moyens de redirection sont rapportés au corps 63 de l'élément de guidage 6 par collage optique.

La figure 1B est une vue de dessus du vitrage 100 de la figure 1A considérée au niveau de l'interface entre la première feuille de verre 1 et l'intercalaire de feuilletage 3. Le support de diodes 50 a par exemple la forme d'un disque plein. Alternativement, le support 50 peut avoir la forme d'un anneau.

Dans ce premier mode de réalisation, l'élément de guidage 6 et le support 50 sont fixés à l'intercalaire de feuilletage 3, au fond du trou traversant 4, par exemple au moyen d'une colle déposée sur des zones de collage 9, 9' respectives. La zone de collage 9 du support 50 est par exemple située au centre de sa face arrière 50b. Les zones de collage 9' de l'élément de guidage 6 sont par exemple situées de manière à se trouver en dehors des cônes d'émission des diodes 5. Les zones de collage 9, 9' présentent chacune une épaisseur de préférence inférieure à 500µm, et plus préférentiellement inférieur à 200µm.

Alternativement, l'élément de guidage 6 et le support 50 peuvent chacun être fixés au moyen d'un élément adhésif double face.

L'élément de guidage 6 peut également ou alternativement être maintenu en position dans le trou traversant 4 par collage au niveau de l'interface entre la paroi interne 14 du trou traversant 4 et la face de sortie 62 de l'élément de guidage 6. Dans ce cas, une colle optique est avantageusement utilisée. La colle optique est une colle à réticulation élevée qui permet de réaliser une continuité optique entre l'élément de guidage 6 et la première feuille 1 afin ne pas perturber l'injection de la lumière.

De préférence, le trou traversant 4 est fermé par un couvercle 8 qui peut être opaque ou transparent. Dans ce mode réalisation, le couvercle 8 à la forme générale d'un disque collé à la première surface principale 11 par exemple au moyen d'un cordon de colle 80 déposé en périphérie d'une face intérieur 81 du couvercle.

La figure 1C montre un vitrage 100C selon une première variante du premier mode de réalisation. La face d'entrée 61 et la face de sortie 62 de l'élément de guidage 6 présentent respectivement une hauteur d'entrée h1 et une hauteur de sortie h2 selon la première direction X. Dans ce vitrage 100C, la hauteur d'entré h1 et supérieure à la hauteur de sortie h2. Par conséquent, les parois externes longitudinales de l'élément de guidage 6 ne sont pas parallèles.

Dans cette variante, le couvercle 8 fermant le trou traversant 4 comporte un rebord 82 configuré pour former une cavité qui contient le trou traversant 4. Cette configuration permet de fournir davantage d'espace que n'en offre le seul trou traversant 4 pour positionner les diodes 5 et l'élément de guidage 6. Les diodes 5 sont ici disposées à l'intérieur de la cavité, par exemple sur une face intérieure 81 du couvercle 8. Le couvercle 8 est de préférence opaque.

Le couvercle 8 peut être amovible. Le couvercle 8 est par exemple fixé à la première face principale 11 de la première feuille 1 au moyen d'attaches 16, par exemple de type clip, coopérant avec le rebord 82 du couvercle 8. Le couvercle 8 peut ainsi être démonté pour accéder au trou traversant 4.

La figure 1D montre un vitrage 100D selon une deuxième variante du premier mode de réalisation. Dans cette variante, l'élément de guidage 6 est fixé en périphérie du support de diodes 50, par exemple par collage.

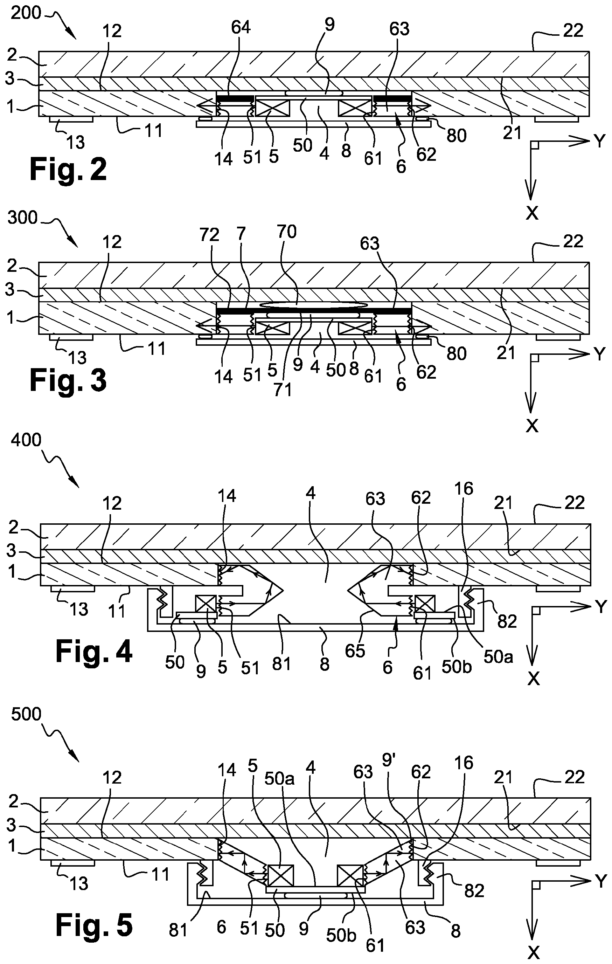

La figure 2 montre un vitrage 200 selon un deuxième mode de réalisation similaire au mode de réalisation de la figure 1A mais dans lequel la paroi externe de l'élément de guidage 6 disposée entre l'intercalaire de feuilletage 3 et l'élément de guidage 6 est recouverte d'une couche réfléchissante 64. La couche réfléchissante 64 est par exemple réalisée par dépôt sur l'élément de guidage 6 d'une couche de type argenture. La couche réfléchissante 64 permet d'éviter que la lumière ne soit visible depuis l'autre côté du vitrage, en l'occurrence depuis l'extérieur du véhicule. Il s'agit de ce qu'on appelle « point chaud », ou « hot spot » en anglais. Plus largement, toutes les parois externes du corps 63 autres que la face d'entrée 61 et de la face de sortie 62 peuvent être revêtues d'une couche réfléchissante.

La figure 3 montre un troisième mode de réalisation d'un vitrage 300 comportant un support de montage 7 distinct du support de diodes 50. Le support de montage 7 a par exemple la forme d'un disque ayant un diamètre inférieur à celui du trou traversant 4. Le support de montage 7 comprend une première surface principale 71 ayant la même orientation que la première surface principale 11 de la première feuille de verre 1, et une deuxième surface principale 72 opposée à la première surface principale 71.

Dans ce mode de réalisation, l'élément de guidage 6 annulaire est préalablement fixé sur la première surface principale 71 du support de montage 7, par exemple au moyen de la colle 9, puis le support de montage 7 est fixé à l'intercalaire de feuilletage 3, par exemple au moyen d'une colle 70. Pour prévenir l'apparition d'un point chaud, le support de montage 7 est avantageusement réfléchissant.

La figure 4 montre un quatrième mode de réalisation d'un vitrage 400 dans lequel les diodes 5 sont disposées en dehors du trou traversant 4 et non plus à l'intérieur. Les diodes 5 sont par exemples placées sur la première feuille 1, en périphérie du trou traversant 4. Par exemple, la surface d'émission 51 des diodes 5 affleure la paroi interne 14 formée par le trou traversant 4.

Dans ce mode de réalisation, l'élément de guidage 6 présente également une forme générale annulaire mais sa face d'entrée 61 et sa face de sortie 62 se trouvent d'un même côté de l'élément de guidage 6. L'élément de guidage 6 est configuré pour réfléchir la lumière à 180°, par exemple au moyen de deux parois externes biseautées 65 disposées du côté opposé aux faces d'entrée 61 et de sortie 62. Les parois externes biseautées 65 forment chacune un angle avec la première direction X de préférence compris entre 40° et 50°.

Le support de diodes 50 présente par exemple une forme annulaire ayant un diamètre interne supérieur au diamètre externe de l'élément de guidage 6. Le support de diodes 50 est par exemple collé sur la face intérieure 81 du couvercle 8 mais pourrait alternativement être collé sur la première surface principale 11 de la première feuille de verre 1.

L'élément de guidage 6 peut indifféremment être fixé sur la face intérieure 81 du couvercle 8 ou à l'intercalaire de feuilletage 3.

La figure 5 montre un cinquième mode de réalisation d'un vitrage 500 dans lequel l'élément de guidage 6 a une forme tronconique avec une section longitudinale sensiblement parallélépipédique. Dans cette configuration, les parois externes de l'élément de guidage 6 ne peuvent pas être fixées à l'intercalaire de feuilletage 3 ou au couvercle 8. La zone de collage 9' de l'élément de guidage 6 se situe avantageusement à l'interface entre la face de sortie 62 et la paroi interne 14 de la première feuille de verre 1. Dans ce cas, le collage est de préférence un collage optique.

Les figures 6A, 7 et 8A montrent des vitrages 600A, 700, 800A selon des sixième, septième et huitième modes de réalisation similaires respectivement aux modes de réalisation des figures 1A, 2 et 3 mais qui en diffèrent toutefois en ce que les diodes 5 sont à émissions frontales. Les diodes 5 sont tournées à 90° pour que leur surface d'émission 51 soit toujours en face de la face d'entrée 61 de l'élément de guidage 6.

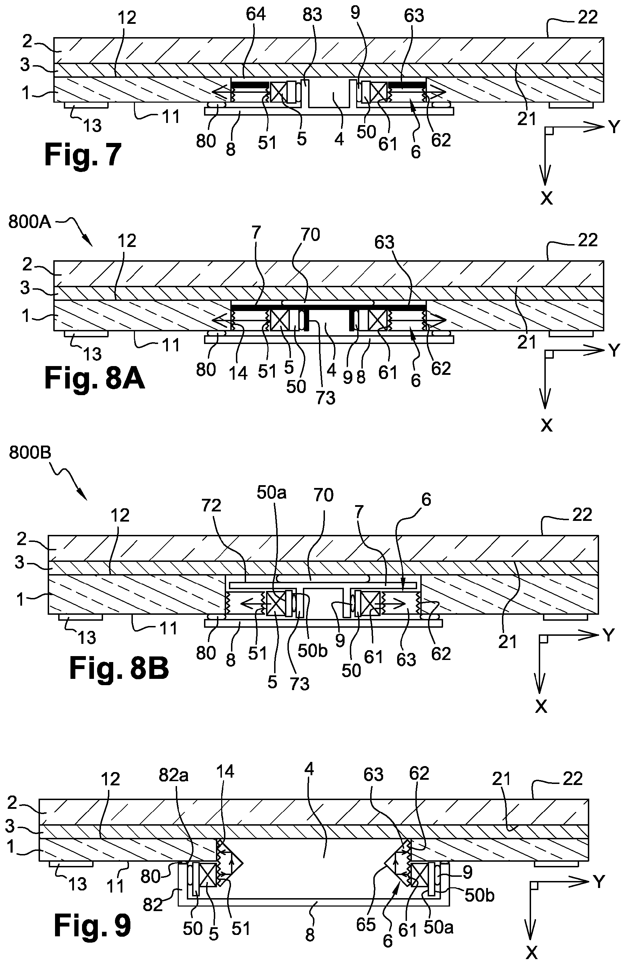

Dans ces modes de réalisation, le support de diodes 50 est flexible et est positionné dans le trou traversant 4 de manière à former un anneau, comme illustré sur la figure 6B. Avantageusement, le support de diodes 50 est fixé à un ergot 83 appartenant au couvercle 8 dans les modes de réalisation des figures 6A et 7, ou à un ergot 73 appartenant au support de montage 7 dans le mode de réalisation de la figure 8A. Similairement aux cas où le supporte de montage 50 est fixé au fond du trou traversant 4, le support de 50 peut être fixé à l'ergot 73, 83 au moyen d'une colle déposée dans des zones de collage 9.

Dans le mode réalisation de la figure 6A, l'ergot 83 s'étendant en saillie depuis la face intérieure 81 du couvercle 8 selon la première direction X. L'ergot 83 a par exemple une forme cylindrique.

Dans le mode réalisation de la figure 8A, l'ergot 73 s'étendant en saillie depuis la première surface principale 71 du support de montage 7. L'ergot 83 a par exemple une forme annulaire.

D'autres formes d'ergot sont bien entendu envisageables, telle qu'une forme oblongue. L'ergot peut également ne pas avoir une section fermée mais être constitué de plusieurs portions d'anneau.

La figure 6C montre un vitrage 600C selon une première variante du sixième mode de réalisation. Dans cette variante, l'ergot 83 est de forme annulaire, similairement au mode de réalisation de la figure 7.

La figure 6D montre un vitrage 600D selon une deuxième variante du sixième mode de réalisation. Dans cette variante, outre l'ergot 83 de forme annulaire, la hauteur de la face d'entrée 61 est supérieure à la hauteur de la face de sortie 62. C'est le cas par exemple lorsque l'épaisseur de la première feuille de verre 1 est inférieure à la hauteur de la surface d'émission 51 des diodes 5. Cette configuration permet de compenser le décentrage provoqué par cette différence de hauteur.

La figure 8B montre un vitrage 800B selon une variante du huitième mode de réalisation. Dans cette variante, le support de montage 7 n'est pas réfléchissant. L'élément de guidage 6 est alors avantageusement espacé du support de montage 7, par exemple au moyen d'écarteurs.

La figure 9 montre un neuvième mode de réalisation d'un vitrage 900 dans lequel l'élément de guidage 6 est configuré pour réfléchir la lumière à 180°, similairement au mode de réalisation de la figure 4. L'élément de guidage 6 peut ne pas comporter de parois externes susceptibles d'être fixées à l'intercalaire de feuilletage 3 ou au couvercle 8. Dans ce cas, l'élément de guidage 6 est avantageusement fixé à la paroi interne 14 formé par le trou traversant 4 dans la première feuille de verre 1. Cette fixation est de préférence réalisée par collage optique.

Dans ce mode réalisation, le rebord 82 du couvercle 8 comporte une surface extrême 82a par l'intermédiaire de laquelle le couvercle est fixé sur la première surface principale 11 de la première feuille 1, par exemple par collage 80. Le support de diode 50 peut alors être collé sur une paroi intérieure 82b du rebord 82.

Optionnellement, les parois externes biseautées 65 de l'élément de guidage 6 sont métallisées, c'est-à-dire recouvertes d'une couche réfléchissante comprenant du métal.

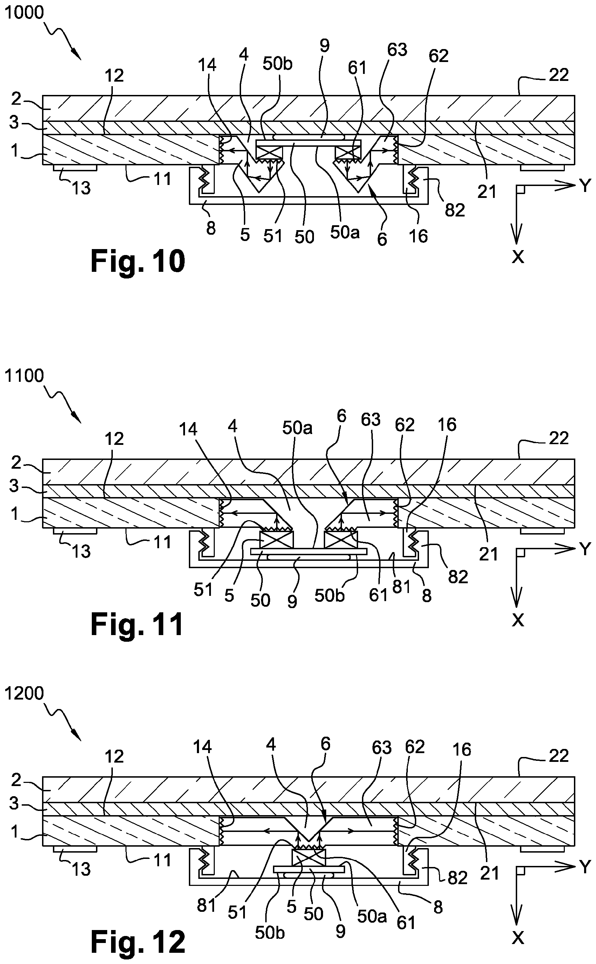

La figure 10 montre un dixième mode de réalisation d'un vitrage 1000 dans lequel les diodes 5 à émission frontale sont disposées de manière à émettre la lumière selon la première direction X, vers l'intérieur du véhicule. Dans ce cas, l'élément de guidage 6 comporte un renvoi d'angle à 45° pour guider la lumière jusqu'à la paroi interne 14.

La figure 11 montre un onzième mode de réalisation d'un vitrage 1100 dans lequel les diodes 5 sont supportées par le couvercle 8 et leur surface d'émission 51 est orientée vers le fond du trou traversant 4. Dans ce cas, de manière similaire au mode de réalisation de la figure 10, l'élément de guidage 6 comporte un renvoi d'angle à 45° pour guider la lumière jusqu'à la paroi interne 14.

La figure 12 montre un vitrage 1200 selon un douzième mode de réalisation similaire au mode de réalisation de la figure 11 mais qui en diffère toutefois en ce que le vitrage 1200 ne comporte qu'une seule diode 5 à émission frontale. L'utilisation d'une seule diode permet de réduire le coût de production du vitrage. L'élément de guidage 6 a par exemple une forme de disque s'étendant sur toute la surface du trou traversant 4. Dans ce cas, la face d'entrée 61 de l'élément de guidage 6 se situe dans le même plan ou dans un plan sensiblement parallèle à la première surface principale 11 de la première feuille de verre 1. La face d'entrée 61 est par exemple disposée au centre du disque formé par l'élément de guidage. L'épaisseur de l'élément de guidage 6 est de préférence inférieure ou égale à l'épaisseur de la première feuille 1.

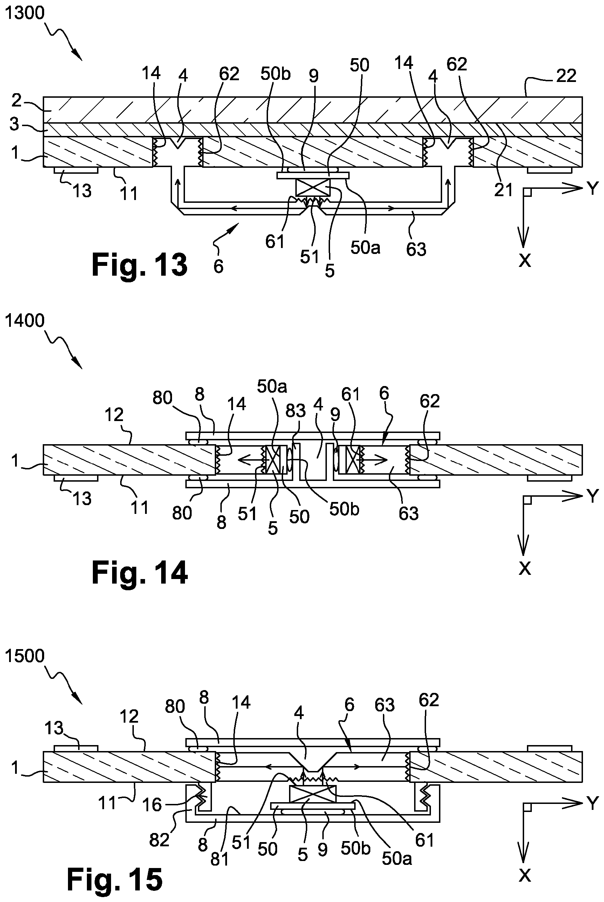

La figure 13 montre un treizième mode de réalisation d'un vitrage 1300 comportant plusieurs points d'injection de la lumière. La première feuille 1 est en effet percée de plusieurs trous traversants 4, chaque trou traversant 4 formant une paroi interne 14 dans l'épaisseur de la première feuille 1.

Avantageusement, le vitrage comporte une seule diode 5 et un seul élément de guidage 6. La diode 5 est par exemple disposée sur la première surface principale 11 de la première feuille 1, entre les trous traversants 4. La lumière émise par la diode 5 à émission frontale est dirigée selon la première direction X, vers l'intérieur du véhicule. Dans ce mode de réalisation, l'élément de guidage 6 comporte plusieurs surfaces de sortie 62, chacune étant disposée en regard de l'une des parois internes 14. Grâce à cette configuration, il est possible d'injecter de la lumière à plusieurs endroits du vitrage en n'utilisant qu'une seule source lumineuse, ce qui réduit le coût de production du vitrage.

La figure 14 montre un quatorzième mode de réalisation d'un vitrage 1400 dans lequel l'élément de guidage 6 et les diodes sont configurés de manière similaire au mode de réalisation de la figure 6A. Cependant, le vitrage 1400 est ici un vitrage simple, c'est-à-dire qu'il ne comporte qu'une seule (la première) feuille de verre 1. Un autre couvercle 8 fixée sur la deuxième surface principale 12 de la première feuille de verre 1 ferme avantageusement le trou traversant 4.

Dans ce mode de réalisation, les moyens d'extractions de la lumière 13 peuvent être indifféremment être disposée sur la première surface principale 11 et/ou sur la deuxième surface principale de la première feuille de verre 1.

La figure 15 montre un quinzième mode de réalisation d'un vitrage 1500 dans lequel l'élément de guidage 6 et les diodes sont configurés de manière similaire au mode de réalisation de la figure 12. Cependant, le vitrage 1500 est ici aussi un vitrage simple, comme dans le mode de réalisation de la figure 14.

Naturellement, l'invention n'est pas limitée aux modes de réalisation décrits en référence aux figures et des variantes pourraient être envisagées sans sortir du cadre de l'invention.

## Revendications

1. Vitrage éclairant (100A, 100C, 100D, 200, 300, 400, 500, 600A, 600C, 600D, 700, 800A, 800B, 900, 1000, 1100, 1200, 1300, 1400, 1500) comportant :
- une première feuille transparente, de verre (1) ou plastique, percée d'un trou traversant (4) délimité par une paroi interne (14) ;
- au moins une diode électroluminescente inorganique (5) comprenant une surface d'émission (51) de lumière selon une direction principale d'émission sensiblement orthogonale à la surface d'émission,
le vitrage étant **caractérisé en ce qu'**il comporte un élément de guidage (6) de lumière comportant une face d'entrée (61) disposée en regard de la surface d'émission, un corps (63), et une face de sortie (62) disposée en regard de la paroi interne, ladite diode électroluminescente présentant un cône d'émission d'au moins 80°.

2. Vitrage (100A, 100C, 100D, 200, 300, 600A, 600C, 600D, 700, 800A, 800B, 1000, 1100, 1200, 1400, 1500) selon la revendication 1 **caractérisé en ce que** la face d'entrée est espacée de la surface d'émission, notamment d'au plus 5mm et même d'au plus 1mm, ou est en contact optique par une colle ou est en contact physique, et/ou la face de sortie (62) est espacée de la paroi interne (14) notamment d'au plus 5mm et même d'au plus 1mm, ou est en contact optique par une colle ou est en contact physique.

3. Vitrage (100A, 100C, 100D, 200, 300, 600A, 600C, 600D, 700, 800A, 800B, 1000, 1100, 1200, 1400, 1500) selon l'une des revendications 1 ou 2 **caractérisé en ce que** la face d'entrée (61) et le corps (63) sont logés dans le trou traversant (4), la face d'entrée étant une surface non plane, de préférence espacée de la surface d'émission notamment d'au plus 5mm, et/ou la face de sortie (62) étant une surface non plane de préférence espacée de la paroi interne (14).

4. Vitrage (100A, 100C, 100D, 200, 300, 600A, 600C, 600D, 700, 800A, 800B, 1000, 1100, 1200, 1400, 1500) selon la revendication 3 **caractérisé en ce que** la face d'entrée (61) non plane, de préférence espacée de la surface d'émission (51) notamment d'au plus 5mm, est munie de moyens de redirection (68) de la lumière appartenant à la liste suivante : lentilles de Fresnel (681), lentilles convexes (682), réseaux prismatiques (683), réseaux de microlentilles convexes (684) et moyens de collimation (685), les moyens de redirection faisant partie intégrante du corps (63) de l'élément de guidage (6) ou les moyens de redirection étant rapportés au corps de l'élément de guidage par collage optique.

5. Vitrage (1000, 1100, 1200, 1500) selon l'une quelconque des revendications 1 à 4 **caractérisé en ce que** la face d'entrée (61) est en regard du trou traversant (4) voir même dans le trou traversant.

6. Vitrage (100A, 100C, 100D, 200, 300, 400, 500, 600A, 600C, 600D, 700, 800, 900, 1000, 1100, 1200, 1300) selon l'une quelconques des revendications 1 à 5 **caractérisé en ce qu'**il comporte en outre une deuxième feuille de verre (2) et un intercalaire de feuilletage (3) disposé entre la première feuille (1) de préférence de verre et la deuxième feuille, le vitrage étant notamment bombé.

7. Vitrage (100A, 100C, 100D, 200, 300, 400, 500, 600A, 600C, 600D, 700, 800A, 800B, 900, 1000, 1100, 1200, 1300) selon la revendication 6 **caractérisé en ce que** l'intercalaire de feuilletage (3) ou la deuxième feuille de verre (2) forme un fond pour le trou traversant (4), le corps (63) de l'élément de guidage (6) étant en regard, notamment espacé, du fond du trou traversant.

8. Vitrage (200, 700) selon la revendication 7 **caractérisé en ce que** le corps (63) de l'élément de guidage (6) comporte un revêtement externe (64) réfléchissant et est notamment assemblé au fond du trou traversant (4) par exemple par collage ou assemblé sur une face intérieure (81) d'un couvercle (8) fermant le trou traversant (4), le couvercle délimitant une cavité englobant le trou traversant.

9. Vitrage (300, 800A, 800B) selon l'une des revendications 7 ou 8 **caractérisé en ce que** le trou traversant (4) présente une première dimension caractéristique selon une direction de référence (Y), le corps (63) de l'élément de guidage (6) étant assemblé sur un support de montage (7) présentant une deuxième dimension caractéristique selon la direction de référence inférieure à la première dimension caractéristique, le support de montage étant disposé sur l'intercalaire de feuilletage (3) ou sur la deuxième feuille de verre (2).

10. Vitrage (300, 800A, 800B) selon la revendication 9 caractérisé en que le support de montage (7) est réfléchissant ou est opaque et en ce que, notamment lorsque l'élément de guidage (6) a une paroi externe libre transparente, au moins une partie du corps (63) en regard du support de montage est espacée du support de montage.

11. Vitrage (400, 900) selon l'une quelconque des revendications 1 à 10 **caractérisé en ce que** ladite diode électroluminescente (5), notamment montée sur un support de diodes (50) comme une carte de circuit électronique, est disposée en regard de la première feuille (1) en périphérie du trou traversant (4), par exemple sur la première feuille (1) en périphérie du trou traversant (4).

12. Vitrage (400, 900) selon la revendication 11 **caractérisé en ce que** l'élément de guidage (6) est configuré pour rediriger la lumière à au moins 80°, même à 90° et mieux à au moins 170° ou même à 180°, notamment par une paroi externe à facettes ou une paroi courbe.

13. Vitrage (100A, 100C, 100D, 200, 300, 400, 500, 600A, 600C, 600D, 700, 800A, 800B, 900, 1000, 1100, 1200, 1400, 1500) selon l'une quelconque des revendications 1 à 12 **caractérisé en ce qu'**il comporte un couvercle (8) fermant le trou traversant (4), le couvercle délimitant une cavité englobant le trou traversant, notamment ladite diode électroluminescente (5) étant disposée à l'intérieur de la cavité.

14. Vitrage (300, 800A, 800B) selon la revendication 13 **caractérisé en ce que** le trou traversant (4) présente une première dimension caractéristique selon une direction de référence (Y), ladite diode électroluminescente (5) ou plusieurs diodes électroluminescentes étant montées sur un support de diodes (50) commun ou sur plusieurs supports individuels qui sont assemblés sur un support de montage (7) présentant une deuxième dimension caractéristique selon la direction de référence inférieure à la première dimension caractéristique, le support de montage étant disposé sur l'intercalaire de feuilletage (3) ou sur la deuxième feuille de verre (2), notamment ladite ou lesdites diodes électroluminescentes étant disposée au moins en partie à l'intérieur de la cavité, lorsque la ou les diodes électroluminescentes sont à émission frontale le support de montage comportant un ergot (73) en regard de la paroi interne (14) sur lequel est fixé le ou les support de diodes, lorsque la ou les diodes électroluminescentes sont à émission latérale, le ou les support de diodes étant fixés dans la cavité sur une face principale (71) du support de montage.

15. Vitrage (400, 1100, 1200, 1500) selon la revendication 13 **caractérisé en ce que** le couvercle (8) comporte une face intérieure (81) à la cavité, ladite diode électroluminescente (5), de préférence à émission latérale, étant disposée sur la face intérieure du couvercle, et notamment le couvercle est opaque et lorsque l'élément de guidage (6) a une paroi externe libre transparente, au moins une partie du corps (63) en regard du couvercle est espacée du couvercle.

16. Vitrage (400) selon la revendication 15 **caractérisé en ce que** l'élément de guidage (6) est assemblé à la face intérieure (81) du couvercle (8) par des zones de collage (9') décalées de la direction principale d'émission de la ou des diodes électroluminescentes (5).

17. Vitrage (500) selon l'une quelconque des revendications 1 à 16 **caractérisé en ce que** l'élément de guidage (6) est assemblé à la première feuille (1) par collage au niveau de l'interface entre la paroi interne (14) du trou traversant (4) et la face de sortie (62) de l'élément de guidage au moyen d'une colle optique.

18. Vitrage (100A, 100C, 100D, 200, 300, 400, 600A, 600C, 600D, 700, 800A, 800B, 1000, 1100, 1200, 1300) selon l'une quelconque des revendications 7 à 10 **caractérisé en ce que** l'élément de guidage (6) est assemblé au fond du trou traversant (4), ou sur un support de montage (7) fixé au fond du trou traversant, par des zones de collage (9') décalées de la direction principale d'émission de la ou des diodes électroluminescentes (5).

19. Vitrage (1300) selon l'une quelconque des revendications 1 à 11 **caractérisé en ce que** la première feuille (1) est percée d'une pluralité de trous traversants (4), l'élément de guidage (6) comportant une pluralité de faces de sortie (62), chaque face de sortie étant disposée en regard de la paroi interne (14) de l'un des trous traversant.

20. Vitrage (100A, 100C, 100D, 200, 300, 600A, 600C, 600D, 700, 800A, 800B, 1000, 1100, 1200, 1400, 1500) selon l'une des revendications précédentes **caractérisé en ce qu'**il comprend une pluralité de diodes électroluminescentes inorganiques (5) présentant un cône d'émission d'au moins 80° et comprenant une surface d'émission (51) de lumière selon une direction principale d'émission sensiblement orthogonale à la surface d'émission et ladite face d'entrée (61) est disposée en regard de la surface d'émission desdites diodes.

21. Vitrage (100A, 100C, 100D, 200, 300, 400, 500, 600A, 600C, 600D, 700, 800A, 800B, 900, 1000, 1100, 1400) selon l'une quelconque des revendications 1 à 20 **caractérisé en ce que** l'élément de guidage (6) s'étend le long de la paroi interne (14) du trou traversant (4), éventuellement avec une section fermée, et est commun à plusieurs diodes électroluminescentes (5) inorganiques, notamment la paroi interne est courbe et l'élément de guidage est annulaire ou est une portion d'un anneau.

22. Vitrage (100A, 100C, 100D, 200, 300, 400, 500, 600A, 600C, 600D, 700, 800A, 800B, 900, 1000, 1100, 1400) selon l'une quelconque des revendications 1 à 21 **caractérisé en ce qu'**il comporte des moyens d'extraction de lumière (13), extraction de la lumière guidée dans la première feuille, notamment choisis parmi une couche diffusante en regard voire sur l'une des faces principales de la première feuille ou une texturation de l'une des faces principales de la première feuille ou encore des éléments diffusants dans la première feuille en particulier par gravure laser.

23. Vitrage selon l'une quelconque des revendications 1 à 22 **caractérisé en ce que** l'élément de guidage est une fibre optique pour ladite ou les diodes ou un ensemble de fibres optiques pour ladite ou les diodes.

## Patentansprüche

1. Leuchtverglasung (100A, 100C, 100D, 200, 300, 400, 500, 600A, 600C, 600D, 700, 800A, 800B, 900, 1000, 1100, 1200, 1300, 1400, 1500), die vorweist:
- eine erste transparente Folie aus Glas (1) oder Kunststoff, die von einem Durchgangsloch (4) durchbohrt ist, das von einer Innenwand (14) begrenzt wird;
- mindestens eine anorganische Leuchtdiode (5), umfassend eine Emissionsoberfläche (51) für Licht in einer Hauptemissionsrichtung, die im Wesentlichen orthogonal zur Emissionsoberfläche verläuft,
wobei die Verglasung **dadurch gekennzeichnet ist, dass** sie ein Lichtleitelement (6) vorweist, das eine Eintrittsseite (61), die gegenüber der Emissionsoberfläche angeordnet ist, einen Körper (63) und eine Austrittsseite (62), die gegenüber der Innenwand angeordnet ist, vorweist, wobei die Leuchtdiode einen Emissionskegel von mindestens 80° aufweist.

2. Verglasung (100A, 100C, 100D, 200, 300, 600A, 600C, 600D, 700, 800A, 800B, 1000, 1100, 1200, 1400, 1500) nach Anspruch 1,
**dadurch gekennzeichnet, dass** die Eintrittsseite von der Emissionsoberfläche beabstandet ist, insbesondere um höchstens 5 mm und sogar um höchstens 1 mm, oder durch einen Kleber in optischem Kontakt steht oder in physischem Kontakt steht, und/oder die Austrittsseite (62) von der Innenwand (14) beabstandet ist, insbesondere um höchstens 5 mm und sogar um höchstens 1 mm, oder durch einen Kleber in optischem Kontakt steht oder in physischem Kontakt steht.

3. Verglasung (100A, 100C, 100D, 200, 300, 600A, 600C, 600D, 700, 800A, 800B, 1000, 1100, 1200, 1400, 1500) nach einem der Ansprüche 1 oder 2,
**dadurch gekennzeichnet, dass** die Eintrittsseite (61) und der Körper (63) in dem Durchgangsloch (4) untergebracht sind, wobei die Eintrittsseite eine nicht ebene Oberfläche ist, die vorzugsweise von der Emissionsoberfläche insbesondere um höchstens 5 mm beabstandet ist, und/oder die Austrittsseite (62) eine nicht ebene Oberfläche ist, die vorzugsweise von der Innenwand (14) beabstandet ist.

4. Verglasung (100A, 100C, 100D, 200, 300, 600A, 600C, 600D, 700, 800A, 800B, 1000, 1100, 1200, 1400, 1500) nach Anspruch 3,
**dadurch gekennzeichnet, dass** die nicht ebene Eintrittsseite (61), die vorzugsweise von der Emissionsoberfläche (51) insbesondere um höchstens 5 mm beabstandet ist, mit Mitteln zur Umlenkung (68) des Lichts, die in der folgenden Auflistung enthalten sind, versehen ist: Fresnel-Linsen (681), konvexe Linsen (682), prismatische Anordnungen (683), konvexe Mikrolinsengitter (684) und Kollimationsmittel (685), wobei die Umlenkmittel integraler Bestandteil des Körpers (63) des Leitelements (6) sind oder die Umlenkmittel durch optisches Verkleben mit dem Körper des Leitelements verbunden sind.

5. Verglasung (1000, 1100, 1200, 1500) nach einem der Ansprüche 1 bis 4,
**dadurch gekennzeichnet, dass** die Eintrittsseite (61) dem Durchgangsloch (4) gegenüberliegt oder sogar in dem Durchgangsloch liegt.

6. Verglasung (100A, 100C, 100D, 200, 300, 400, 500, 600A, 600C, 600D, 700, 800, 900, 1000, 1100, 1200, 1300) nach einem beliebigen der Ansprüche 1 bis 5,
**dadurch gekennzeichnet, dass** sie außerdem eine zweite Glasfolie (2) und eine Laminierzwischenlage (3) vorweist, die zwischen der ersten Folie (1), vorzugsweise aus Glas, und der zweiten Folie angeordnet ist, wobei die Verglasung insbesondere gewölbt ist.

7. Glasfolie (100A, 100C, 100D, 200, 300, 400, 500, 600A, 600C, 600D, 700, 800A, 800B, 900, 1000, 1100, 1200, 1300) nach Anspruch 6,
**dadurch gekennzeichnet, dass** die Laminierzwischenlage (3) oder die zweite Glasfolie (2) einen Boden für das Durchgangsloch (4) bildet, wobei der Körper (63) des Leitelements (6) dem Boden des Durchgangslochs, insbesondere beabstandet, gegenüberliegt.

8. Verglasung (200, 700) nach Anspruch 7, **dadurch gekennzeichnet, dass** der Körper (63) des Leitelements (6) eine reflektierende Außenbeschichtung (64) vorweist und insbesondere am Boden des Durchgangslochs (4) zusammengefügt ist, beispielsweise durch Verkleben, oder an einer Innenseite (81) einer Abdeckung (8) zusammengefügt ist, die das Durchgangsloch (4) verschließt, wobei die Abdeckung einen Hohlraum begrenzt, der das Durchgangsloch einschließt.

9. Verglasung (300, 800A, 800B) nach einem der Ansprüche 7 oder 8,
**dadurch gekennzeichnet, dass** das Durchgangsloch (4) eine erste charakteristische Abmessung in einer Bezugsrichtung (Y) aufweist, wobei der Körper (63) des Leitelements (6) an einem Montagehalter (7) zusammengefügt ist, der eine zweite charakteristische Abmessung in der Bezugsrichtung aufweist, die kleiner als die erste charakteristische Abmessung ist, wobei der Montagehalter auf der Laminierzwischenlage (3) oder auf der zweiten Glasfolie (2) angeordnet ist.

10. Verglasung (300, 800A, 800B) nach Anspruch 9,
**dadurch gekennzeichnet, dass** der Montagehalter (7) reflektierend ist oder opak ist und dass, insbesondere wenn das Leitelement (6) eine transparente freie Außenwand hat, mindestens ein Teil des Körpers (63), der dem Montagehalter gegenüberliegt, von dem Montagehalter beabstandet ist.

11. Verglasung (400, 900) nach einem der Ansprüche 1 bis 10,
**dadurch gekennzeichnet, dass** die Leuchtdiode (5), die insbesondere auf einem Diodenhalter (50) wie einer elektronischen Leiterplatte montiert ist, gegenüber der ersten Folie (1) am Umfang des Durchgangslochs (4) angeordnet ist, beispielsweise auf der ersten Folie (1) am Umfang des Durchgangslochs (4).

12. Verglasung (400, 900) nach Anspruch 11, **dadurch gekennzeichnet, dass** das Leitelement (6) dazu konfiguriert ist, dass es das Licht um mindestens 80°, sogar um 90° und besser um mindestens 170° oder sogar um 180° umlenkt, insbesondere durch eine facettierte Außenwand oder eine gekrümmte Wand.

13. Verglasung (100A, 100C, 100D, 200, 300, 400, 500, 600A, 600C, 600D, 700, 800A, 800B, 900, 1000, 1100, 1200, 1400, 1500) nach einem der Ansprüche 1 bis 12, **dadurch gekennzeichnet, dass** sie eine Abdeckung (8) vorweist, die das Durchgangsloch (4) verschließt, wobei die Abdeckung einen Hohlraum begrenzt, der das Durchgangsloch einschließt, wobei insbesondere die Leuchtdiode (5) im Inneren des Hohlraums angeordnet ist.

14. Verglasung (300, 800A, 800B) nach Anspruch 13,
**dadurch gekennzeichnet, dass** das Durchgangsloch (4) eine erste charakteristische Abmessung in einer Bezugsrichtung (Y) aufweist, wobei die Leuchtdiode (5) oder mehrere Leuchtdioden auf einem gemeinsamen Diodenhalter (50) oder auf mehreren einzelnen Haltern montiert sind, die auf einem Montagehalter (7) zusammengefügt sind, der eine zweite charakteristische Abmessung in der Bezugsrichtung aufweist, die kleiner als die erste charakteristische Abmessung ist, wobei der Montagehalter auf der Laminierzwischenlage (3) oder auf der zweiten Glasfolie (2) angeordnet ist, wobei insbesondere die Leuchtdiode(n) zumindest teilweise im Inneren des Hohlraums angeordnet ist/sind, wenn die Leuchtdiode(n) frontal emittiert/emittieren, wobei der Montagehalter eine Nase (73) gegenüber der Innenwand (14) aufweist, an der der oder die Diodenhalter befestigt ist/sind, wenn die Leuchtdiode(n) seitlich emittiert/emittieren, wobei der oder die Diodenhalter in dem Hohlraum auf einer Hauptseite (71) des Montagehalters befestigt sind.

15. Verglasung (400, 1100, 1200, 1500) nach Anspruch 13,
**dadurch gekennzeichnet, dass** die Abdeckung (8) eine Innenseite (81) zum Hohlraum vorweist, wobei die Leuchtdiode (5), vorzugsweise mit seitlicher Emission, auf der Innenseite der Abdeckung angeordnet ist, und insbesondere die Abdeckung opak ist und wenn das Leitelement (6) eine transparente freie Außenwand hat, mindestens ein Teil des Körpers (63), der gegenüber der Abdeckung liegt, von der Abdeckung beabstandet ist.

16. Verglasung (400) nach Anspruch 15, **dadurch gekennzeichnet, dass** das Leitelement (6) an die Innenseite (81) der Abdeckung (8) durch Klebebereiche (9') zusammengefügt ist, die aus der Hauptemissionsrichtung der Leuchtdiode(n) (5) versetzt sind.

17. Verglasung (500) nach einem der Ansprüche 1 bis 16,
**dadurch gekennzeichnet, dass** das Leitelement (6) an die erste Folie (1) durch Verkleben an der Schnittstelle zwischen der Innenwand (14) des Durchgangslochs (4) und der Austrittsseite (62) des Leitelements mittels eines optischen Klebers zusammengefügt ist.

18. Verglasung (100A, 100C, 100D, 200, 300, 400, 600A, 600C, 600D, 700, 800A, 800B, 1000, 1100, 1200, 1300) nach einem der Ansprüche 7 bis 10,
**dadurch gekennzeichnet, dass** das Leitelement (6) am Boden des Durchgangslochs (4) oder auf einem Montagehalter (7), der am Boden des Durchgangslochs befestigt ist, durch Klebebereiche (9') zusammengefügt ist, die aus der Hauptemissionsrichtung der Leuchtdiode(n) (5) versetzt sind.

19. Verglasung (1300) nach einem der Ansprüche 1 bis 11,
**dadurch gekennzeichnet, dass** die erste Folie (1) von einer Vielzahl von Durchgangslöchern (4) durchbohrt ist, wobei das Leitelement (6) eine Vielzahl von Austrittsseiten (62) vorweist, wobei jede Austrittsseite gegenüber der Innenwand (14) eines der Durchgangslöcher angeordnet ist.

20. Verglasung (100A, 100C, 100D, 200, 300, 600A, 600C, 600D, 700, 800A, 800B, 1000, 1100, 1200, 1400, 1500) nach einem der vorstehenden Ansprüche,
**dadurch gekennzeichnet, dass** sie eine Vielzahl von anorganischen Leuchtdioden (5) umfasst, die einen Emissionskegel von mindestens 80° aufweisen und umfassend eine Emissionsoberfläche (51) für Licht gemäß einer Hauptemissionsrichtung, die im Wesentlichen orthogonal zur Emissionsoberfläche verläuft, und die Eintrittsseite (61) gegenüber der Emissionsoberfläche der Dioden angeordnet ist.

21. Verglasung (100A, 100C, 100D, 200, 300, 400, 500, 600A, 600C, 600D, 700, 800A, 800B, 900, 1000, 1100, 1400) nach einem der Ansprüche 1 bis 20,
**dadurch gekennzeichnet, dass** das Leitelement (6) sich entlang der Innenwand (14) des Durchgangslochs (4) erstreckt, gegebenenfalls mit einem geschlossenen Abschnitt, und mehreren anorganischen Leuchtdioden (5) gemeinsam ist, insbesondere die Innenwand gekrümmt ist und das Leitelement ringförmig ist oder Teil eines Rings ist.

22. Verglasung (100A, 100C, 100D, 200, 300, 400, 500, 600A, 600C, 600D, 700, 800A, 800B, 900, 1000, 1100, 1400) nach einem der Ansprüche 1 bis 21,
**dadurch gekennzeichnet, dass** sie Mittel zur Lichtextraktion (13) vorweist, die das in der ersten Folie geführte Licht extrahieren, insbesondere ausgewählt aus einer streuenden Schicht gegenüber oder sogar auf einer der Hauptseiten der ersten Folie oder einer Texturierung einer der Hauptseiten der ersten Folie oder sogar streuenden Elementen, insbesondere durch Laserätzen, in der ersten Folie.

23. Verglasung nach einem der Ansprüche 1 bis 22,
**dadurch gekennzeichnet, dass** das Leitelement eine Lichtleitfaser für die eine oder die Dioden oder eine Anordnung von Lichtleitfasern für die eine oder die Dioden ist.

## Claims

1. An illuminating glazing unit (100A, 100C, 100D, 200, 300, 400, 500, 600A, 600C, 600D, 700, 800A, 800B, 900, 1000, 1100, 1200, 1300, 1400, 1500) comprising:
- a first transparent sheet of glass (1) or plastic drilled with a through-hole (4) delimited by an internal wall (14);
- at least one inorganic light-emitting diode (5) comprising an emission surface (51) emitting light in a main direction of emission substantially orthogonal to the emission surface,
the glazing unit being **characterized in that** it comprises a light guide element (6) comprising an input face (61) arranged facing the emission surface, a body (63) and an output face (62) arranged facing the internal wall, said light-emitting diode having an emission cone of at least 80°.

2. The glazing unit (100A, 100C, 100D, 200, 300, 600A, 600C, 600D, 700, 800A, 800B, 1000, 1100, 1200, 1400, 1500) as claimed in claim 1, **characterized in that** the input face is spaced away from the emission surface, in particular by at most 5 mm, and even by at most 1 mm, or is in optical contact via an adhesive or is in physical contact, and/or the output face (62) is spaced away from the internal wall (14) in particular by at most 5 mm, and even by at most 1 mm, or is in optical contact via an adhesive or is in physical contact.

3. The glazing unit (100A, 100C, 100D, 200, 300, 600A, 600C, 600D, 700, 800A, 800B, 1000, 1100, 1200, 1400, 1500) as claimed in either of claims 1 and 2, **characterized in that** the input face (61) and the body (63) are housed in the through-hole (4), the input face being a non-planar surface, preferably spaced away from the emission surface in particular by at most 5 mm, and/or the output face (62) being a non-planar surface, preferably spaced away from the internal wall (14).

4. The glazing unit (100A, 100C, 100D, 200, 300, 600A, 600C, 600D, 700, 800A, 800B, 1000, 1100, 1200, 1400, 1500) as claimed in claim 3, **characterized in that** the non-planar input face (61), preferably spaced away from the emission surface (51), in particular by at most 5 mm, is equipped with light redirection means (68) belonging to the following list: Fresnel lenses (681), convex lenses (682), gratings (683), arrays of convex micro lenses (684) and collimation means (685), the redirection means forming an integral part of the body (63) of the guide element (6), or the redirection means being attached to the body of the guide element by optical bonding.

5. The glazing unit (1000, 1100, 1200, 1500) as claimed in any one of claims 1 to 4, **characterized in that** the input face (61) faces the through-hole (4) or is even in the through-hole.

6. The glazing unit (100A, 100C, 100D, 200, 300, 400, 500, 600A, 600C, 600D, 700, 800, 900, 1000, 1100, 1200, 1300) as claimed in any one of claims 1 to 5, **characterized in that** it further comprises a second sheet of glass (2) and a lamination interlayer (3) placed between the first sheet (1) for preference of glass and the second sheet, the glazing unit in particular being curved.

7. The glazing unit (100A, 100C, 100D, 200, 300, 400, 500, 600A, 600C, 600D, 700, 800A, 800B, 900, 1000, 1100, 1200, 1300) as claimed in claim 6, **characterized in that** the lamination interlayer (3) or the second sheet of glass (2) forms a bottom for the through-hole (4), the body (63) of the guide element (6) facing, notably being spaced away from, the bottom of the through-hole.

8. The glazing unit (200, 700) as claimed in claim 7, **characterized in that** the body (63) of the guide element (6) comprises a reflective external coating (64) and is notably assembled in the bottom of the through-hole (4) for example by bonding or assembled on an interior face (81) of a cover (8) closing the through-hole (4), the cover delimiting a cavity enveloping the through-hole.

9. The glazing unit (300, 800A, 800B) as claimed in either of claims 7 and 8, **characterized in that** the through-hole (4) has a first characteristic dimension in a reference direction (Y), the body (63) of the guide element (6) being assembled on a mounting carrier (7) that has a second characteristic dimension in the reference direction that is smaller than the first characteristic dimension, the mounting carrier being placed on the lamination interlayer (3) or on the second sheet of glass (2).

10. The glazing unit (300, 800A, 800B) as claimed in claim 9, **characterized in that** the mounting carrier (7) is reflective or is opaque and **in that**, in particular when the guide element (6) has a transparent free external wall, at least part of the body (63) facing the mounting carrier is spaced away from the mounting carrier.

11. The glazing unit (400, 900) as claimed in any one of claims 1 to 10, **characterized in that** said light-emitting diode (5), in particular mounted on a diode carrier (50), such as an electronic circuit board, is positioned facing the first sheet (1) at the periphery of the through-hole (4), for example on the first sheet (1) at the periphery of the through-hole (4).

12. The glazing unit (400, 900) as claimed in claim 11, **characterized in that** the guide element (6) is configured to redirect the light at at least 80°, even at 90° and better still at least 170° or even at 180°, in particular via a faceted external wall or a curved wall.

13. The glazing unit (100A, 100C, 100D, 200, 300, 400, 500, 600A, 600C, 600D, 700, 800A, 800B, 900, 1000, 1100, 1200, 1400, 1500) as claimed in any one of claims 1 to 12, **characterized in that** it comprises a cover (8) closing the through-hole (4), the cover delimiting a cavity enveloping the through-hole, in particular said light-emitting diode (5) being positioned inside the cavity.

14. The glazing unit (300, 800A, 800B) as claimed in claim 13, **characterized in that** the through-hole (4) has a first characteristic dimension in a reference direction (Y), said light-emitting diode (5) or several light-emitting diodes being mounted on a common diode carrier (50) or on several individual carriers which are assembled on a mounting carrier (7) that has a second characteristic dimension in the reference direction that is smaller than the first characteristic dimension, the mounting carrier being placed on the lamination interlayer (3) or on the second sheet of glass (2), in particular said light-emitting diode or diodes being positioned at least in part inside the cavity, when the light-emitting diode or diodes are top-emitting diodes the mounting carrier comprising a lug (73) facing the internal wall (14), to which the diode carrier or carriers is or are fixed, when the light-emitting diode or diodes are side-emitting diodes the diode carrier or carriers being fixed in the cavity on a main face (71) of the mounting carrier.

15. The glazing unit (400, 1100, 1200, 1500) as claimed in claim 13, **characterized in that** the cover (8) comprises a face (81) internal to the cavity, said light-emitting diode (5), preferably a side-emitting diode, being placed on the interior face of the cover, and in particular the cover is opaque and, when the guide element (6) has a transparent free external wall, at least part of the body (63) facing the cover is spaced away from the cover.

16. The glazing unit (400) as claimed in claim 15, **characterized in that** the guide element (6) is assembled with the interior face (81) of the cover (8) by bonding zones (9') which are offset from the main direction of emission of the light-emitting diode or diodes (5).

17. The glazing unit (500) as claimed in any one of claims 1 to 16, **characterized in that** the guide element (6) is assembled with the first sheet (1) by bonding at the interface between the internal wall (14) of the through-hole (4) and the output face (62) of the guide element using an optical adhesive.

18. The glazing unit (100A, 100C, 100D, 200, 300, 400, 600A, 600C, 600D, 700, 800A, 800B, 1000, 1100, 1200, 1300) as claimed in any one of claims 7 to 10, **characterized in that** the guide element (6) is assembled in the bottom of the through-hole (4) or on a mounting carrier (7) fixed to the bottom of the through-hole by bonding zones (9') which are offset from the main direction of emission of the light-emitting diode or diodes (5).

19. The glazing unit (1300) as claimed in any one of claims 1 to 11, **characterized in that** the first sheet (1) is pierced with a plurality of through-holes (4), the guide element (6) comprising a plurality of output faces (62), each output face being positioned facing the internal wall (14) of one of the through-holes.

20. The glazing unit (100A, 100C, 100D, 200, 300, 600A, 600C, 600D, 700, 800A, 800B, 1000, 1100, 1200, 1400, 1500) as claimed in one of the preceding claims, **characterized in that** it comprises a plurality of inorganic light-emitting diodes (5) having an emission cone of at least 80°, and comprising an emission surface (51) emitting light in a main direction of emission substantially orthogonal to the emission surface, and said input face (61) is positioned facing the emission surface of said diodes.

21. The glazing unit (100A, 100C, 100D, 200, 300, 400, 500, 600A, 600C, 600D, 700, 800A, 800B, 900, 1000, 1100, 1400) as claimed in any one of claims 1 to 20, **characterized in that** the guide element (6) extends along the internal wall (14) of the through-hole (4), possibly with a closed cross section, and is common to several inorganic light-emitting diodes (5), in particular the internal wall is curved and the guide element is annular or is a portion of an annulus.

22. The glazing unit (100A, 100C, 100D, 200, 300, 400, 500, 600A, 600C, 600D, 700, 800A, 800B, 900, 1000, 1100, 1400) as claimed in any one of claims 1 to 21, **characterized in that** it comprises light extraction means (13) for extraction of the light guided in the first sheet, which means are in particular chosen from a diffusing layer facing or even on one of the main faces of the first sheet or a texturing of one of the main faces of the first sheet, or alternatively diffusing elements in the first sheet produced in particular by laser etching.

23. The glazing unit as claimed in any one of claims 1 to 22, **characterized in that** the guide element is an optical fiber for said diode or diodes or a collection of optical fibers for said diode or diodes.
